# EUROPEAN PATENT APPLICATION

(11) **EP 4 787 511 A1**
(43) Date of publication of application: **05.08.2026**
(21) Application number: 24869965.4
(22) Date of filing: 08.07.2024
(51) Int. Cl.: H01M 10/04, H01M 50/538, H01M 50/533

(54) **WOUND CELL, CYLINDRICAL BATTERY AND ELECTRICAL APPARATUS**

(30) Priority: 28.09.2023 CN 202322673214 U
(71) Applicant: BYD Company Limited, Shenzhen, Guangdong 518118 (CN)
(72) Inventor: YAO, Lyuhua, Shenzhen, Guangdong 518118 (CN); LI, Maoyin, Shenzhen, Guangdong 518118 (CN); WANG, Jianjun, Shenzhen, Guangdong 518118 (CN); LEI, Lei, Shenzhen, Guangdong 518118 (CN)
(74) Representative: Mathys & Squire
(86) International application number: PCT/CN2024/104300
(87) International publication number: WO 2025/066409

(57) **Abstract**

A winding battery cell 100, a cylindrical battery 1000, and an electric apparatus are provided. The winding battery cell 100 is formed through winding and defines a reel hole 10 on an inner side. The winding battery cell 100 includes an electrode plate 20, and the electrode plate 20 includes an active substance coating portion 21 and a tab portion 22. The tab portion 22 is connected to a side of the active substance coating portion 21, and the tab portion 22 includes a plurality of tabs 221. An end of the electrode plate 20 that faces the reel hole 10 in a winding direction is a winding start section 23. A tab portion 22 of the winding start section 23 is a first tab portion 224, and the first tab portion 224 includes a plurality of first tabs 2211. In a direction from the active substance coating portion 21 to the tab portion 22, a height dimension of the first tab 2211 protruding out of the active substance coating portion 21 is a first height. In the winding direction of the winding battery cell 100, first heights of the plurality of first tabs 2211 gradually increase.

## Description

### CROSS-REFERENCE TO RELATED APPLICATIONS

This application is proposed based on Chinese Patent Application No. 202322673214.2, filed on September 28, 2023, and claims priority to this Chinese Patent Application, which is incorporated herein by reference in its entirety.

### TECHNICAL FIELD

This application relates to the field of battery technologies, and in particular, to a winding battery cell, a cylindrical battery, and an electric apparatus.

### BACKGROUND

Electrode plate winding is one of common production manners for a battery cell of a cylindrical battery. After an electrode plate is wound, a tab is flattened and then welded to a current collector plate. In a related technology, to avoid interference between the tab and a winding needle in a winding process, a winding start section of the electrode plate is not provided with a tab. This results in a small coverage area of tabs on the electrode plate and a low current-carrying capacity of a winding battery cell.

### SUMMARY

This application is intended to resolve at least one of the foregoing technical problems in a conventional technology to some extent.

In view of this, this application needs to provide a winding battery cell, and the winding battery cell has a higher current-carrying capacity.

This application further provides a cylindrical battery, and the cylindrical battery has the foregoing winding battery cell.

This application further provides an electric apparatus, and the electric apparatus has the foregoing cylindrical battery.

According to the winding battery cell provided in this application, the winding battery cell is formed through winding and defines a reel hole on an inner side. The winding battery cell includes an electrode plate, and the electrode plate includes an active substance coating portion and a tab portion. The tab portion is connected to a side of the active substance coating portion in a width direction, and the tab portion includes a plurality of tabs arranged in a length direction of the electrode plate. An end of the electrode plate that faces the reel hole in a winding direction is a winding start section. A tab portion of the winding start section is a first tab portion, and the first tab portion includes a plurality of first tabs. In a direction from the active substance coating portion to the tab portion, a height dimension of the first tab protruding out of the active substance coating portion is a first height, and in the winding direction of the winding battery cell, first heights of the plurality of first tabs gradually increase.

According to the winding battery cell in an embodiment of this application, in the winding direction of the winding battery cell, the first heights of the plurality of first tabs gradually increase, so that a coverage area of the tabs on the electrode plate can be expanded, thereby improving a current-carrying capacity of the winding battery cell. In addition, a coverage area of flattened tabs on an end portion of the winding battery cell can be expanded, thereby further improving the current-carrying capacity of the winding battery cell. Besides, a quantity of overlapping layers of the first tabs can be increased, so as to reduce a probability of damage to the electrode plate under the first tabs caused by a case in which the first tabs are burned through when a current collector apparatus is welded to the first tabs, thereby increasing a yield of the cylindrical battery.

In addition, the winding battery cell according to the foregoing embodiment of this application may further have the following additional technical features.

According to an example of this application, in the plurality of first tabs, a first height of a first tab closest to an end portion of an end that is of the winding start section and that faces the reel hole is less than or equal to 1 mm.

According to an example of this application, in the winding direction, the first heights of the plurality of first tabs increase linearly.

According to an example of this application, in a width direction of the electrode plate, a side edge that is of the first tab and that is away from the active substance coating portion is a first edge. In the winding direction, at least a part of the first edge extends along a straight line and/or a curve gradually away from the active substance coating portion.

According to an example of this application, in the winding direction, the first edge extends along an oblique line gradually away from the active substance coating portion.

According to an example of this application, first edges of the plurality of first tabs are collinear.

According to an example of this application, in the winding direction, the first edge extends along an arc line away from the active substance coating portion, and the first edges of the plurality of first tabs have a common tangent line.

According to an example of this application, the plurality of tabs are all bent toward a side on which the reel hole is located, and ends of the plurality of first tabs that face the reel hole are flush with a circumferential wall of the reel hole or are located on a radially outer side of the reel hole.

According to an example of this application, end portions of the ends of the plurality of first tabs are aligned in an axial direction of the winding battery cell.

According to an example of this application, the electrode plate further includes a body section, and the body section is connected to an end of the winding start section that is away from the reel hole. A tab portion of the body section is a second tab portion, and the second tab portion includes a plurality of second tabs. In the direction from the active substance coating portion to the tab portion, a height dimension of the second tab protruding out of the active substance coating portion is a second height, and second heights of the plurality of second tabs are equal.

According to an example of this application, the tab portion further includes a connection region, and the connection region is connected between the active substance coating portion and the plurality of tabs.

According to an example of this application, a plurality of liquid passage holes are formed in the tab portion. The liquid passage hole is formed at a position at which the tab is connected to the connection region, and is formed between two adjacent tabs.

According to an example of this application, the liquid passage hole is formed by recessing the tab from a side edge in the winding direction toward another side edge.

According to an example of this application, in the length direction of the electrode plate, a width of the liquid passage hole is 0.2 mm to 2 mm, and the width of the liquid passage hole is greater than a distance between two adjacent tabs.

According to an example of this application, the plurality of liquid passage holes include a plurality of first through holes and a plurality of second through holes. The plurality of second through holes are spaced apart among the plurality of first through holes, and a flow cross-sectional area of the first through hole is less than a flow cross-sectional area of the second through hole.

According to an example of this application, an end of the tab that is away from the active substance coating portion is a tab inner end. In the direction from the active substance coating portion to the tab portion, the tab inner end extends obliquely toward a downstream side of the electrode plate in the winding direction.

The cylindrical battery provided in this application includes the winding battery cell in the foregoing embodiment.

The electric apparatus provided in this application includes the cylindrical battery in the foregoing embodiment.

Some of additional aspects and advantages of this application are provided in the following descriptions, and some of the additional aspects and advantages become clear from the following descriptions or are learned from practice of this application.

### BRIEF DESCRIPTION OF DRAWINGS

FIG. 1 is a schematic diagram of a winding battery cell according to an embodiment of this application;
FIG. 2 is a schematic diagram of an unfolded state of an electrode plate shown in FIG. 1;
FIG. 3 is a sectional view of a winding battery cell according to an embodiment of this application, where a tab is in an unflattened state;
FIG. 4 is a schematic diagram of a tab and a liquid passage hole according to an embodiment of this application;
FIG. 5 is another schematic diagram of a tab and a liquid passage hole according to an embodiment of this application;
FIG. 6 is still another schematic diagram of a tab and a liquid passage hole according to an embodiment of this application;
FIG. 7 is a schematic diagram of an electrode plate according to an embodiment of this application;
FIG. 8 is another schematic diagram of an electrode plate according to an embodiment of this application; and
FIG. 9 is a schematic diagram of a cylindrical battery according to an embodiment of this application.

### Reference numerals:

1000. Cylindrical battery;
100. Winding battery cell;
10. Reel hole;
20. Electrode plate; 21. Active substance coating portion; 22. Tab portion; 221. Tab; 2211. First tab; 22111. First edge; 222. Connection region; 223. Liquid passage hole; 224. First tab portion; 225. Second tab portion; 223a. First through hole; 223b. Second through hole; 23. Winding start section; 24. Body section; 241. Second tab; 25. Tab inner end;
200. Current collector apparatus.

### DESCRIPTION OF EMBODIMENTS

The following describes in detail embodiments of this application, and examples of the embodiments are shown in the accompanying drawings. Same or similar reference numerals throughout the accompanying drawings indicate same or similar elements or elements having same or similar functions. The embodiments described below with reference to the accompanying drawings are examples and aim to explain this application and should not be understood as a limitation on this application.

The disclosure described below provides many different embodiments or examples for implementing different structures of this application. To simplify the disclosure of this application, components and arrangements of specific examples are described below. Certainly, the components and the arrangements are merely examples and are not intended to limit this application. In addition, reference numbers and/or reference letters may be repeated in different examples in this application, and such repetition is for simplification and clarity purposes, and does not indicate a relationship between the various embodiments and/or arrangements discussed. In addition, this application provides examples of various specific processes and materials, but a person of ordinary skill in the art may be aware of application of another process and/or use of another material.

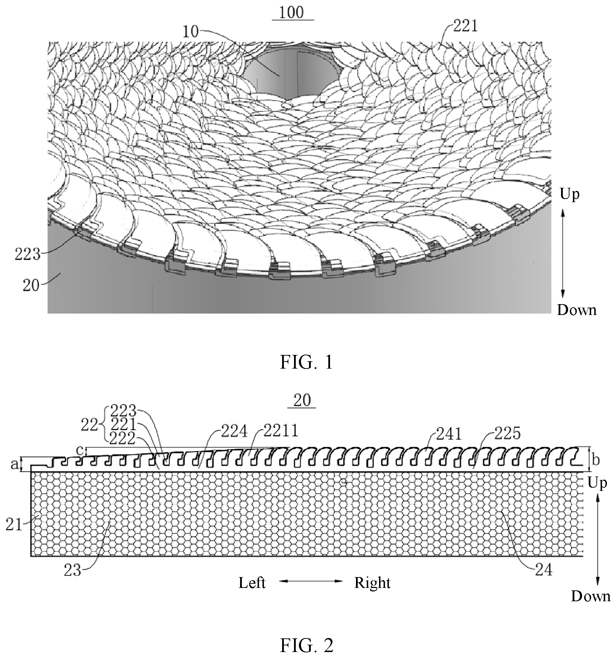

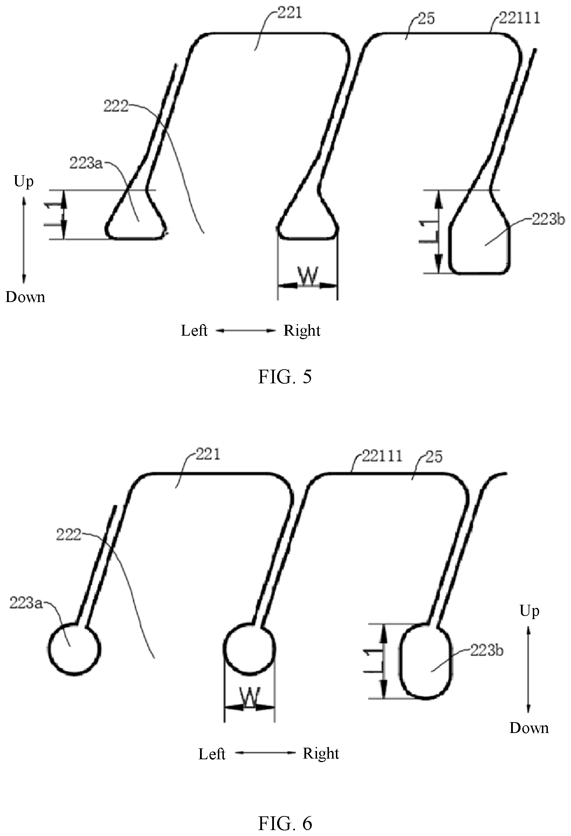

The following describes a winding battery cell 100 according to an embodiment of a first aspect of this application with reference to FIG. 1 to FIG. 9.

As shown in FIG. 1, FIG. 2, FIG. 3, and FIG. 9, according to the winding battery cell 100 according to the embodiment of the first aspect of this application, the winding battery cell 100 is formed through winding and defines a reel hole 10 on an inner side. The winding battery cell 100 includes an electrode plate 20, and the electrode plate 20 includes an active substance coating portion 21 and a tab portion 22. The tab portion 22 is connected to a side of the active substance coating portion 21 in a width direction (for example, an up-down direction shown in FIG. 2). The tab portion 22 includes a plurality of tabs 221 arranged in a length direction (for example, a left-right direction shown in FIG. 2) of the electrode plate 20. An end of the electrode plate 20 that faces the reel hole 10 in a winding direction (for example, a right-to-left direction shown in FIG. 2) is a winding start section 23. A tab portion of the winding start section 23 is a first tab portion 224, and the first tab portion 224 includes a plurality of first tabs 2211. In a direction from the active substance coating portion 21 to the tab portion 22, a height dimension of the first tab 2211 protruding out of the active substance coating portion 21 is a first height. In other words, in the direction from the active substance coating portion 21 to the tab portion 22, a distance between an outermost side of the first tab 2211 and an upper side edge of the active substance coating portion 21 is formed into the first height. For example, in FIG. 2, in an up-down direction, a distance a between an uppermost side of the first tab 2211 and the upper side edge of the active substance coating portion 21 is formed into the first height. In the winding direction of the winding battery cell 100, first heights of the plurality of first tabs 2211 gradually increase.

The active substance coating portion 21 is coated with active substance. In a discharging process of the winding battery cell 100, the active substance coating portion 21 is infiltrated in an electrolytic solution. The plurality of tabs 221 are connected to a current collector apparatus 200. The electrolytic solution reacts with the active substance of the active substance coating portion 21 on the electrode plate 20 to generate a current. The current is transmitted to the tabs 221 through the electrode plate 20, and the tabs 221 output the current to the outside by using the current collector apparatus 200, thereby implementing the discharging process of the winding battery cell 100.

It should be noted that, in the discharging process of the winding battery cell 100, the current flows throughout the entire electrode plate 20. Therefore, expanding a coverage area of the tabs 221 on the electrode plate 20 can improve a current-carrying capacity of the winding battery cell 100.

In a winding process of the winding battery cell 100, as the electrode plate 20 is wound, a winding diameter of the electrode plate 20 gradually increases, and a distance between the electrode plate 20 and an edge of the reel hole 10 also gradually increases. In this embodiment, the first heights of the plurality of first tabs 2211 gradually increase in the winding direction of the winding battery cell 100. In this way, more regions of the electrode plate 20 can be covered by the first tabs 2211 at the end of the electrode plate 20 that faces the reel hole 10. In the discharging process of the winding battery cell, more tabs 221 may export the current from the electrode plate 20, thereby improving the current-carrying capacity of the winding battery cell 100.

In the winding process, the first height of the first tab 2211 may be adapted to the distance between the electrode plate 20 and the edge of the reel hole 10. After winding is completed, the tabs 221 are concentrated on an end portion of the winding battery cell 100. Flattened first tabs 2211 may be positioned close to the edge of the reel hole 10, thereby expanding a coverage area of the first tabs 2211 on the end portion of the winding battery cell 100. When the current collector apparatus 200 is connected to the end portion of the winding battery cell 100, a contact area between the current collector apparatus 200 and the first tabs 2211 can be expanded, thereby further improving the current-carrying capacity of the winding battery cell 100.

In addition, the flattened first tabs 2211 are all positioned close to the edge of the reel hole 10, making the wound end portion that is of the winding start section 23 and that is provided with the first tabs 2211 more flattened. This facilitates connection between the winding battery cell 100 and the current collector apparatus 200.

In actual application, the current collector apparatus 200 is usually welded to flattened tabs 221. In addition, it may be understood in the art that the tabs 221 are relatively thin and prone to being burned through in a welding process. In a winding process of the electrode plate 20, tabs 221 overlap with tabs 221 of a previous circle to form an overlapping region. Welding the current collector apparatus 200 to tabs 221 in the overlapping region can reduce probability of damage to the electrode plate 20 under the tabs 221 caused when the tabs 221 are burned through, thereby increasing a yield of a cylindrical battery 1000.

In this embodiment, in the winding direction of the winding battery cell 100, the first heights of the plurality of first tabs 2211 increase, so that first tabs 2211 downstream in the winding direction may overlap with more first tabs 2211 upstream in the winding direction. This can increase a quantity of layers of first tabs 2211 in the overlapping region, thereby increasing a thickness of the first tabs 2211 in the overlapping region. When the current collector apparatus 200 is welded to the first tabs 2211 in the foregoing overlapping region, the probability of damage to the electrode plate 20 under the first tabs 2211 caused when the first tabs 2211 are burned through can be further reduced, thereby further increasing the yield of the cylindrical battery 1000.

According to the winding battery cell 100 in the embodiment of the first aspect of this application, in the winding direction of the winding battery cell 100, the first heights of the plurality of first tabs 2211 gradually increase, so that the coverage area of the tabs 221 on the electrode plate 20 can be expanded, thereby improving a current-carrying capacity of the winding battery cell. In addition, a coverage area of the flattened tabs 221 on the end portion of the winding battery cell 100 can be expanded, thereby further improving the current-carrying capacity of the winding battery cell 100. Besides, the quantity of overlapping layers of the first tabs 2211 can be increased, so as to reduce the probability of damage to the electrode plate 20 under the first tabs 2211 caused by a case in which the first tabs 2211 are burned through when the current collector apparatus 200 is welded to the first tabs 2211, thereby increasing the yield of the cylindrical battery 1000.

In some embodiments of this application, in the plurality of first tabs 2211, a first height of a first tab 2211 closest to an end portion of an end that is of the winding start section 23 and that faces the reel hole 10 is less than or equal to 1 mm. For example, a first height of a first tab 2211 located on a most upstream side in the winding direction may be 1 mm, 0.5 mm, or 0.4 mm. In this way, the first height of the first tab 2211 located on the most upstream side in the winding direction is not excessively large. First heights of other first tabs 2211 in the first tab portion 224 on the electrode plate 20 increase based on the first height of the first tab 2211 located on the most upstream side in the winding direction. This can ensure that first tabs 2211 of the first circle around the reel hole 10 do not extend into the reel hole 10 after being flattened, thereby ensuring normal winding of the electrode plate 20. In a product design process, the first height of the first tab 2211 located on the most upstream side in the winding direction may be adjusted, so as to meet more product design requirements and reduce product design difficulty.

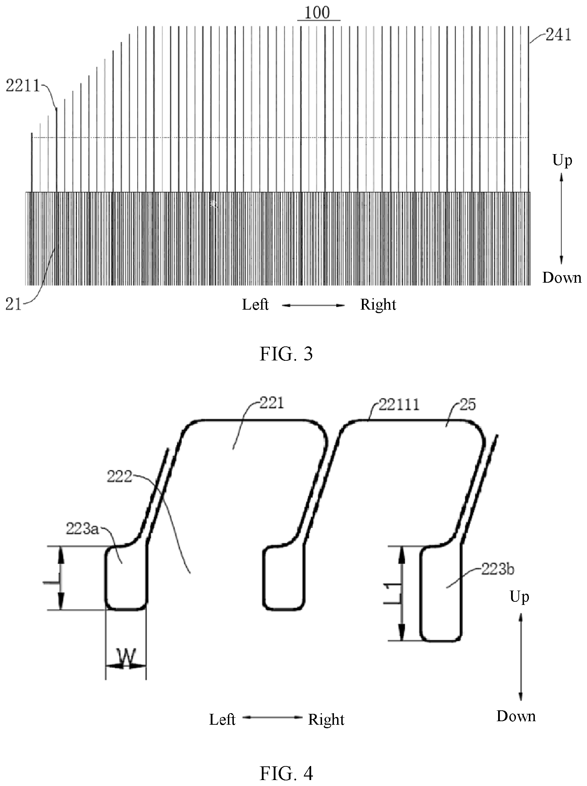

In some embodiments of this application, as shown in FIG. 2 and FIG. 3, in the winding direction, the first heights of the plurality of first tabs 2211 increase linearly. Therefore, increasing of the first heights of the plurality of first tabs 2211 in the winding direction can be achieved. In addition, in the product design process, the product design requirements can be met simply by adjusting the first height of the first tab 2211 located on the most upstream side in the winding direction and the linearly increased heights, thereby reducing the product design difficulty.

In some embodiments of this application, the electrode plate 20 includes a positive electrode plate and a negative electrode plate. A separator is disposed between the positive electrode plate and the negative electrode plate. In a direction perpendicular to an axis of the winding battery cell 100, a difference between first heights of first tabs 2211 of two adjacent circles of the electrode plate 20 is a sum of thicknesses of the positive electrode plate, the negative electrode plate, and two layers of separators. In this way, in the winding process of the winding battery cell 100, a positive electrode plate 20, a negative electrode plate 20, and the separator are wound together. After being flattened, first tabs 2211 of an outer circle may align with edges of first tabs 2211 of an inner circle, so that the first tabs 2211 achieve more uniform coverage around a periphery of the reel hole 10.

In some embodiments of this application, as shown in FIG. 4 to FIG. 8, in the width direction of the electrode plate 20, a side edge that is of the first tab 2211 and that is away from the active substance coating portion 21 is a first edge 22111. In the winding direction, at least a part of the first edge 22111 extends along a straight line and/or a curve gradually away from the active substance coating portion 21. In other words, at least a part of the first edge 22111 may extend along the straight line gradually away from the active substance coating portion 21, or at least a part of the first edge 22111 may extend along the curve gradually away from the active substance coating portion 21, or at least a part of the first edge 22111 may extend along the straight line and the curve gradually away from the active substance coating portion 21.

Therefore, a length of the first edge 22111 in the width direction of the electrode plate 20 is relatively large. After the first tabs 2211 are flattened, corresponding first edges 22111 may overlap with first tabs 2211 of a previous circle. In other words, there is an overlapping region between the first tabs 2211 of the outer circle and the first tabs 2211 of the previous circle. In this way, the first tabs 2211 have a relatively large quantity of weldable regions, thereby facilitating welding between the current collector apparatus 200 and the first tabs 2211. In addition, the first tabs 2211 of the outer circle press against the first tabs 2211 of the inner circle, thereby improving stability of a structure of the winding battery cell 100. In addition, at least a part of the first edge 22111 extends along the straight line and/or the curve gradually away from the active substance coating portion 21, so that a material of the first tab 2211 can be reduced, thereby reducing production costs.

In the product design process, parameters such as a shape and an extension dimension of the first edge 22111 may be adjusted to meet more product design requirements and reduce the product design difficulty.

In some embodiments of this application, in the winding direction, the first edge 22111 extends along an oblique line gradually away from the active substance coating portion 21. Therefore, the length of the first edge 22111 in the width direction of the electrode plate 20 is relatively large. After the first tabs 2211 are flattened, the corresponding first edges 22111 may overlap with the first tabs 2211 of the previous circle. In other words, there is an overlapping region between the first tabs 2211 of the outer circle and the first tabs 2211 of the previous circle. In this way, the first tabs 2211 have a relatively large quantity of weldable regions, thereby facilitating welding between the current collector apparatus 200 and the first tabs 2211. In addition, the first tabs 2211 of the outer circle press against the first tabs 2211 of the inner circle, thereby improving stability of the structure of the winding battery cell 100. In addition, the first edge 22111 extends along the oblique line gradually away from the active substance coating portion 21, so that the material of the first tab 2211 can be reduced, thereby reducing the production costs.

In the product design process, parameters such as a dimension of the oblique line along which the first edge 22111 extends and an angle of the oblique line relative to a horizontal plane may be adjusted to meet more product design requirements and reduce the product design difficulty.

In some embodiments of this application, as shown in FIG. 2, first edges 22111 of the plurality of first tabs 2211 are collinear. In other words, extension lines of extended first edges 22111 of the plurality of first tabs 2211 coincide. In this way, in the winding direction, a common line of the plurality of first edges 22111 extends in a direction away from the electrode plate 20, and heights of the plurality of first edges 22111 on the common line increase gradually, so that the first heights of the first tabs 2211 increase gradually. In the product design process, the first heights of the plurality of first tabs 2211 can be adjusted by adjusting an included angle C between the common line of the first edges 22111 and the length direction of the electrode plate 20, thereby reducing the product design difficulty.

In some embodiments of this application, in a direction from an end of the electrode plate 20 to another end, the first edge 22111 extends along an arc line away from the active substance coating portion 21, and the first edges 22111 of the plurality of first tabs 2211 have a common tangent line. In other words, in an extension direction of the common tangent line, the plurality of first edges 22111 are tangent to the common tangent line. In this way, in the winding direction, the common tangent line of the plurality of first edges 22111 extends in the direction away from the electrode plate 20, and heights of the plurality of first edges 22111 tangent to the common tangent line increase gradually, so that the first heights of the first tabs 2211 increase gradually. In the product design process, the first heights of the plurality of first tabs 2211 can be adjusted by adjusting an included angle between the common tangent line of the first edges 22111 and the length direction of the electrode plate 20, thereby reducing the product design difficulty.

In some embodiments of this application, as shown in FIG. 1, the plurality of tabs 221 are all bent toward a side on which the reel hole 10 is located, and ends of the plurality of first tabs 2211 that face the reel hole 10 are flush with a circumferential wall of the reel hole 10 or are located on a radially outer side of the reel hole 10. In this way, winding of the electrode plate 20 is not affected by the first tab 2211, and the coverage area of the flattened first tabs 2211 on the end portion of the winding battery cell 100 can be further expanded, thereby further improving the current-carrying capacity of the winding battery cell 100.

In some embodiments of this application, end portions of the ends of the plurality of first tabs 2211 are aligned in an axial direction of the winding battery cell 100. In other words, side edges of the plurality of first tabs 2211 that are close to the reel hole 10 are aligned in a thickness direction of the first tabs 2211, that is, the plurality of first tabs 2211 are flattened and overlapped together. In this way, the quantity of first tabs 2211 in the overlapping region can be increased, so as to reduce the probability of damage to the electrode plate 20 under the first tabs 2211 caused by a case in which the first tabs 2211 are burned through when the current collector apparatus 200 is welded to the first tabs 2211, thereby increasing the yield of the cylindrical battery 1000.

In some embodiments of this application, as shown in FIG. 2, the electrode plate 20 further includes a body section 24. The body section 24 is connected to an end that is of the winding start section 23 and that is away from the reel hole 10. A tab portion 22 of the body section 24 is a second tab portion 225, and the second tab portion 225 includes a plurality of second tabs 241. In the direction from the active substance coating portion 21 to the tab portion 22, a height dimension of the second tab 241 protruding out of the active substance coating portion 21 is a second height. In other words, in the direction from the active substance coating portion 21 to the tab portion 22, a distance between an outermost side of the second tab 241 and an outer side edge of the active substance coating portion 21 is formed into the second height. For example, as shown in FIG. 2, in the up-down direction, a distance b between an uppermost side of the second tab 241 and the upper side edge of the active substance coating portion 21 is formed into the second height. In a winding process of the tabs, the body section 24 surrounds an outer side of the winding start section 23. When the body section 24 begins to wind, the second height of the first wound second tab 241 is less than or equal to a distance between the edge of the reel hole 10 and the electrode plate 20 corresponding to the first wound second tab 241. When the body section 24 continues to wind, subsequent flattened second tabs 241 do not extend into the reel hole 10. In this case, a periphery of the reel hole 10 is covered with the tabs 221. The second heights of the plurality of second tabs 241 are equal, so that a requirement for the coverage of the tabs 221 on the end portion of the winding battery cell 100 can be met, which can reduce process difficulty and production costs.

In some embodiments of this application, as shown in FIG. 2, the tab portion 22 further includes a connection region 222, and the connection region 222 is connected between the active substance coating portion 21 and the plurality of tabs 221. The connection region 222 is provided, and the connection region 222 may transmit a current from the active substance coating portion 21 to the plurality of tabs 221, and may increase a distance between the end portion of the winding battery cell 100 and the electrolytic solution, which reduces a probability that the current collector apparatus 200 connected to the plurality of tabs 221 is in contact with the electrolytic solution, thereby improving reliability of the winding battery cell 100 in a working process.

In some embodiments of this application, as shown in FIG. 2, a plurality of liquid passage holes 223 are formed in the tab portion 22, and the liquid passage hole 223 is formed at a position at which the tab 221 is connected to the connection region 222, and is formed between two adjacent tabs 221. The liquid passage hole 223 is provided, so that when the winding battery cell 100 is placed in the electrolytic solution, the electrolytic solution may be in contact with the electrode plate 20 by using the liquid passage hole 223, thereby increasing an infiltration degree of the electrolytic solution into the electrode plate 20, and improving power generation efficiency of the winding battery cell 100.

In some embodiments of this application, as shown in FIG. 2, the liquid passage hole 223 is formed by recessing the tab 221 from a side edge in the length direction of the electrode plate 20 toward another side edge. In this way, arrangement of the liquid passage holes 223 in the tabs 221 can be achieved through a relatively simple process, which can improve production efficiency and reduce production costs. In addition, such arrangement can shorten a length of a joint between the tabs 221 and the electrode plate 20, thereby reducing difficulty in flattening the tabs 221 and further improving production efficiency.

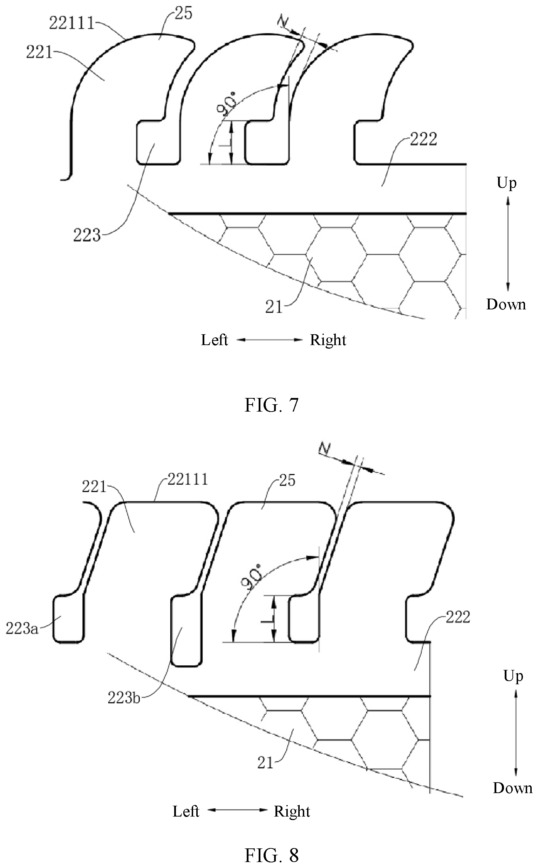

In some embodiments of this application, as shown in FIG. 7 and FIG. 8, two side edges of the liquid passage hole 223 in the length direction of the electrode plate 20 are perpendicular to a side edge that is of the connection region 222 and that is away from the active substance coating portion 21. In this way, in a process of flattening the tabs 221, the two side edges of the liquid passage hole 223 in the length direction of the electrode plate 20 are uniformly stressed, which further reduces difficulty in flattening the tabs 221, and improves position precision after the tabs 221 are flattened.

In some embodiments of this application, as shown in FIG. 4 to FIG. 6, the liquid passage hole 223 is a circular hole, an elliptical hole, an oblong hole, or a polygonal hole. In this way, in the product design process, a shape of the liquid passage hole 223 may be adjusted based on a product design requirement, so as to meet a product design requirement.

In some embodiments of this application, as shown in FIG. 4 to FIG. 6, in the length direction of the electrode plate 20, a width W of the liquid passage hole 223 is 0.2 mm to 2 mm. For example, the width W of the liquid passage hole 223 may be 0.2 mm, 0.5 mm, or 2 mm, and the width W of the liquid passage hole 223 is greater than a distance between two adjacent tabs 221. The distance between two adjacent tabs 221 is a distance between two edges of the two adjacent tabs 221 that are closest to each other. This can ensure a liquid passage capability of the liquid passage hole 223, thereby ensuring the infiltration degree of the electrolytic solution into the electrode plate 20. In the product design process, the width W of the liquid passage hole 223 may be adjusted, so as to meet more product design requirements.

In some embodiments of this application, the plurality of liquid passage holes 223 include a plurality of first through holes 223a and a plurality of second through holes 223b. The plurality of second through holes 223b are spaced apart among the plurality of first through holes 223a. A flow cross-sectional area of the first through hole 223a is less than a flow cross-sectional area of the second through hole 223b. In this way, the liquid passage hole 223 may meet different liquid passage requirements for different positions of the winding battery cell 100, so as to ensure an infiltration effect of the electrolytic solution on the electrode plate 20. In the product design process, parameters such as quantities of first through holes 223a and second through holes 223b, and positions of the first through holes 223a and the second through holes 223b may be adjusted, so as to meet more product design requirements.

In some embodiments of this application, in the width direction of the electrode plate 20, a height L1 of the first through hole 223a is 0.2 mm to 2 mm. For example, the height L1 of the first through hole 223a may be 0.2 mm, 0.5 mm, or 2 mm. A difference between a height L2 of the second through hole 223b and the height of the first through hole 223a is 0.2 mm to 1 mm. For example, the difference between the height L2 of the second through hole 223b and the height L1 of the first through hole 223a may be 0.2 mm, 0.5 mm, or 1 mm. Therefore, it can be ensured that the flow cross-sectional area of the first through hole 223a and the flow cross-sectional area of the second through hole 223b may meet the liquid passage requirement of the electrolytic solution. In the product design process, the height L1 of the first through hole 223a and the difference between the height L2 of the second through hole 223b and the height L1 of the first through hole 223a may be adjusted, so as to meet more product design requirements and reduce the product design difficulty.

In some embodiments of this application, in a circumferential direction of the winding battery cell 100, a quantity of tabs 221 between two adjacent second through holes 223b is 3 to 20. For example, the quantity of tabs 221 between two adjacent second through holes 223b may be 3, 10, or 20. Therefore, distribution of the second through holes 223b may meet the liquid passage requirement of the electrolytic solution. In the product design process, the quantity of tabs 221 between two adjacent second through holes 223b may be adjusted, so as to meet more product design requirements and reduce product design difficulty.

In some embodiments of this application, as shown in FIG. 4 to FIG. 8, an end that is of the tab 221 and that is away from the active substance coating portion 21 is a tab inner end 25. In the direction from the active substance coating portion 21 to the tab portion 22, the tab inner end 25 extends obliquely toward a downstream side of the electrode plate 20 in the winding direction. In this way, a length of the tab inner end 25 in a direction parallel to the electrode plate 20 is larger. After the tabs 221 are flattened, the tab inner end 25 is located on an inner side of the winding battery cell 100, which can expand an overlapping area between the tab inner end 25 and a tab 221 of a previous circle. In addition, after two adjacent tabs 221 are flattened, a tab inner end 25 of a subsequent tab 221 can press against a tab inner end 25 of a previous tab 221. In this way, an area of the overlapping region between the tabs 221 can be further expanded, thereby expanding the weldable region of the first tabs 2211 and facilitating welding between the current collector apparatus 200 and the first tabs 2211.

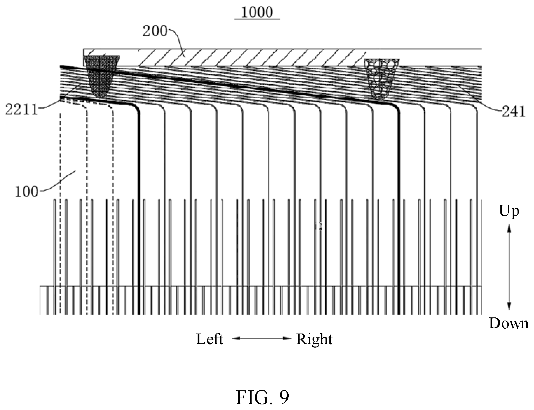

In some embodiments of this application, as shown in FIG. 8 and FIG. 9, a distance N between two adjacent tab inner ends 25 is 0.02 mm to 2.0 mm. For example, the distance N between two adjacent tab inner ends 25 may be 0.02 mm, 0.1 mm, 1.0 mm, or 2.0 mm. In this case, the distance N between two adjacent tab inner ends 25 may not affect bending of the tabs 221 toward the reel hole 10, and adjacent tab inner ends 25 may be overlapped. In the product design process, the distance N between two adjacent tab inner ends 25 may be adjusted, so as to meet more product design requirements and reduce the product design difficulty.

In some embodiments of this application, the active substance coating portion 21 includes a current collector and an active substance layer disposed on the current collector, and the tab portion 22 is electrically connected to the current collector. The current collector is provided, and the current collector may provide an attachment point for the active substance layer. The active substance layer is provided, and the active substance layer may react with the electrolytic solution, so that the winding battery cell 100 can implement a charging/discharging function. In a charging/discharging process of the winding battery cell 100, a current may be transmitted between the active substance layer and the tab portion 22 by using the current collector.

In some embodiments of this application, as shown in FIG. 4, FIG. 5, FIG. 8, and FIG. 9, edges of the tabs 221 are connected with chamfers. The chamfer is smoother, which can reduce burrs at corners of edges of finished tabs 221 during production, thereby simplifying a production process and reducing the production difficulty. In addition, fewer burrs can lower a probability of short circuits within the winding battery cell 100 caused by burr detachment, thereby improving the reliability of the winding battery cell 100 in the working process. Preferably, a dimension of the chamfer is less than or equal to 1.0 mm. For example, the dimension of the chamfer may be 1.0 mm, 0.8 mm, or 0.1 mm. This can ensure that the chamfer does not affect an overall structure of the tab 221.

In some embodiments of this application, the electrode plate 20 is produced through a die-cutting process, and the die-cutting process has a high degree of automation and production precision, thereby improving production efficiency and production precision of the electrode plate 20.

A cylindrical battery 1000 according to an embodiment of a second aspect of this application includes the foregoing winding battery cell 100 according to the embodiment of the first aspect of this application.

According to the cylindrical battery 1000 according to the embodiment of the second aspect of this application, disposing the winding battery cell 100 according to the embodiment of the first aspect of this application makes the current-carrying capacity of the winding battery cell 100 stronger, thereby improving efficiency of the cylindrical battery 1000.

In some embodiments of this application, as shown in FIG. 9, the cylindrical battery 1000 further includes a current collector apparatus 200. The current collector apparatus 200 is disposed on an end portion of the winding battery cell 100 and is connected to the tabs 221. The current collector apparatus 200 is provided, so that a current can be transmitted between the current collector apparatus 200 and the plurality of tabs 221, and the cylindrical battery 1000 can implement a charging/discharging function.

In some embodiments of this application, the current collector apparatus 200 is a current collector plate. The current collector plate is connected to the tabs 221 through welding. Connection through welding is simple to operate and can achieve electrical connection, thereby improving production efficiency and ensuring that the function of the cylindrical battery 1000 can be implemented.

The following describes a production process of the cylindrical battery 1000 according to this embodiment of this application.

First, the electrode plate 20 is die-cut based on a set parameter, and the tabs 221 are formed through die-cutting above the connection region 222 based on the set parameter. The electrode plate 20 is then wound. After winding is completed, the tabs 221 are pre-bent and then flattened. Then, the current collector plate is welded to the plurality of flattened tabs 221, thereby completing the production process of the cylindrical battery 1000.

An electric apparatus according to an embodiment of a third aspect of this application includes the cylindrical battery 1000 according to the embodiment of the second aspect of this application.

According to the electric apparatus in the embodiment of the third aspect of this application, the cylindrical battery 1000 according to the embodiment of the second aspect of this application is provided, so that the efficiency of the cylindrical battery 1000 is higher, thereby improving performance of the electric apparatus.

In descriptions of this application, it will be understood that the orientation or positional relationship indicated by the terms "center", "upper", "lower" "vertical", "horizontal", "top", "bottom", "inner", "outer", "axial", "radial", "circumferential", and the like, is an orientation or positional relationship shown based on the accompanying drawings, and is only for ease of describing this application and simplifying the descriptions, rather than indicating or implying that the apparatus or element indicated must have a specific orientation or be constructed and operated in a specific orientation, and therefore should not be understood as a limitation on this application.

In addition, the terms "first" and "second" are used for a descriptive purpose only and should not be understood as indicating or implying relative importance or implicitly indicating the quantity of the indicated technical features. Therefore, a feature defined by "first" or "second" may explicitly or implicitly include one or more of such features. In the descriptions of this application, "a plurality of" means two or more, unless otherwise explicitly defined.

In this application, unless otherwise explicitly specified and defined, terms such as "mount", "interconnect", "connect", and "fix" will be understood in a broad sense, for example, may be understood as a fixed connection, a detachable connection, or an integrated connection, or may be understood as a direct connection or an indirect connection through an intermediate medium, or may be understood as internal communication between two elements or an interaction relationship between two elements. A person of ordinary skill in the art may understand specific meanings of the foregoing terms in this application based on specific situations.

In this application, unless otherwise clearly specified and defined, that a first feature is "above" or "below" a second feature may be that the first and second features are in direct contact, or the first and second features are in indirect contact through an intermediate medium. In addition, that the first feature is "above", "over", or "on top of" the second feature may be that the first feature is directly above or obliquely above the second feature, or merely indicates that a level height of the first feature is higher than that of the second feature. That the first feature is "under", "below", or "beneath" the second feature may be that the first feature is directly below or obliquely below the second feature, or merely indicates that a horizontal height of the first feature is less than that of the second feature.

In descriptions of this specification, reference to descriptions of the terms such as "one embodiment", "some embodiments", "example", "specific example", or "some examples" means that specific features, structures, materials, or characteristics described with reference to the embodiment or example are included in at least one embodiment or example of this application. In this specification, illustrative expressions of the foregoing terms do not necessarily refer to a same embodiment or example. Furthermore, the described specific features, structures, materials, or characteristics may be combined in any one or more embodiments or examples in a suitable manner. In addition, when there is no contradiction, a person skilled in the art may incorporate and combine different embodiments or examples described in this specification and features of different embodiments or examples.

Although embodiments of this application have been shown and described, a person of ordinary skill in the art may understand that many changes, modifications, replacements, and variations can be made to these embodiments without departing from the principles and purposes of this application, and the scope of this application is defined by the claims and their equivalents.

## Claims

1. A winding battery cell (100), wherein the winding battery cell (100) is formed through winding and defines a reel hole (10) on an inner side, the winding battery cell (100) comprises an electrode plate (20), the electrode plate (20) comprises an active substance coating portion (21) and a tab portion (22), the tab portion (22) is connected to a side of the active substance coating portion (21) in a width direction, and the tab portion (22) comprises a plurality of tabs (221) arranged in a length direction of the electrode plate (20);
an end of the electrode plate (20) that faces the reel hole (10) in a winding direction is a winding start section (23), a tab portion (22) of the winding start section (23) is a first tab portion (224), and the first tab portion (224) comprises a plurality of first tabs (2211); and
in a direction from the active substance coating portion (21) to the tab portion (22), a height dimension of the first tab (2211) protruding out of the active substance coating portion (21) is a first height, and in the winding direction, first heights of the plurality of first tabs (2211) gradually increase.

2. The winding battery cell (100) according to claim 1, wherein in the plurality of first tabs (2211), a first height of a first tab (2211) closest to an end portion of an end of the winding start section (23) that faces the reel hole (10) is less than or equal to 1 mm.

3. The winding battery cell (100) according to claim 1, wherein in the winding direction, the first heights of the plurality of first tabs (2211) increase linearly.

4. The winding battery cell (100) according to claim 1, wherein in the width direction of the electrode plate (20), a side edge of the first tab (2211) that is away from the active substance coating portion (21) is a first edge (22111); and
in the winding direction, at least a part of the first edge (22111) extends along a straight line and/or a curve gradually away from the active substance coating portion (21).

5. The winding battery cell (100) according to claim 4, wherein in the winding direction, the first edge (22111) extends along an oblique line gradually away from the active substance coating portion (21).

6. The winding battery cell (100) according to claim 5, wherein first edges (22111) of the plurality of first tabs (2211) are collinear.

7. The winding battery cell (100) according to claim 4, wherein in the winding direction, the first edge (22111) extends along an arc line away from the active substance coating portion (21), and the first edges (22111) of the plurality of first tabs (2211) have a common tangent line.

8. The winding battery cell (100) according to any one of claims 1 to 7, wherein the plurality of tabs (221) are all bent toward a side on which the reel hole (10) is located, and ends of the plurality of first tabs (2211) that face the reel hole (10) are flush with a circumferential wall of the reel hole (10) or are located on a radially outer side of the reel hole (10).

9. The winding battery cell (100) according to claim 8, wherein end portions of the ends of the plurality of first tabs (2211) are aligned in an axial direction of the winding battery cell (100).

10. The winding battery cell (100) according to any one of claims 1 to 9, wherein the electrode plate (20) further comprises a body section (24), the body section (24) is connected to an end of the winding start section (23) that is away from the reel hole (10), a tab portion (22) of the body section (24) is a second tab portion (225), and the second tab portion (225) comprises a plurality of second tabs (241); and
in the direction from the active substance coating portion (21) to the tab portion (22), a height dimension of the second tab (241) protruding out of the active substance coating portion (21) is a second height, and second heights of the plurality of second tabs (241) are equal.

11. The winding battery cell (100) according to claim 1, wherein the tab portion (22) further comprises a connection region (222), and the connection region (222) is connected between the active substance coating portion (21) and the plurality of tabs (221).

12. The winding battery cell (100) according to any one of claims 1 to 11, wherein a plurality of liquid passage holes (223) are formed in the tab portion (22), and the liquid passage hole (223) is formed at a position at which the tab (221) is connected to the connection region (222), and is formed between two adjacent tabs (221).

13. The winding battery cell (100) according to claim 12, wherein the liquid passage hole (223) is formed by recessing the tab (221) from a side edge in the winding direction toward another side edge.

14. The winding battery cell (100) according to claim 12, wherein in the length direction of the electrode plate (20), a width of the liquid passage hole (223) is 0.2 mm to 2 mm, and the width of the liquid passage hole (223) is greater than a distance between two adjacent tabs (221).

15. The winding battery cell (100) according to claim 12, wherein the plurality of liquid passage holes (223) comprise a plurality of first through holes (223a) and a plurality of second through holes (223b), the plurality of second through holes (223b) are spaced apart among the plurality of first through holes (223a), and a flow cross-sectional area of the first through hole (223a) is less than a flow cross-sectional area of the second through hole (223b).

16. The winding battery cell (100) according to claim 1, wherein an end that is of the tab (221) and that is away from the active substance coating portion (21) is a tab inner end (25), and in the direction from the active substance coating portion (21) to the tab portion (22), the tab inner end (25) extends obliquely toward a downstream side of the electrode plate (20) in the winding direction.

17. A cylindrical battery (1000), comprising the winding battery cell (100) according to any one of claims 1 to 16.

18. An electric apparatus, comprising the cylindrical battery (1000) according to claim 17.
